# EUROPEAN PATENT APPLICATION

(11) **EP 1 580 457 A2**
(43) Date of publication of application: **28.09.2005**
(21) Application number: 05004974.1
(22) Date of filing: 08.03.2005
(51) Int. Cl.: F16H 7/08

(54) **Hydraulic tensioner**

(30) Priority: 25.03.2004 JP 2004088426
(71) Applicant: BorgWarner Morse TEC Japan K.K., Nabari City, Mie Prefecture 518-0495 (JP)
(72) Inventor: Shin, Seungpyo, Hwasung-Shi Kyunggi-do (KR)
(74) Representative: Petruzziello, Aldo

(57) **Abstract**

A hydraulic tensioner (1) for applying tension to a chain comprising a housing (2), a hollow piston (3), a spring, and a pawl (5). The housing (2) has a cylindrical bore (2a) and pawl hole (2b). The hollow piston (3) has rack teeth (3b) along its length and is slidably received by the bore (2a). The piston (3) and the bore (2a) define a fluid chamber within the bore (2a). A spring biases the piston (3) in a protruding direction from the bore. A pawl (5), received by the pawl hole (2b) of the housing has a front surface, a rear surface, and a tooth section biased to engage the rack teeth (3b) of the piston by a pawl spring (6) in a pawl spring accommodating section of the pawl hole (2b). A clearance is present between the pawl hole (2b) and the front surface and the rear surface of the pawl (5), to allow longitudinal travel of the pawl (5).

## Description

### REFERENCE TO RELATED APPLICATIONS

This application claims an invention, which was disclosed in Japanese application number 2004-088426, filed March 25, 2004, entitled "HYDRAULIC CHAIN". The benefit under 35 USC§ 119(a) of the Japanese application is hereby claimed, and the aforementioned application is hereby incorporated herein by reference.

### BACKGROUND OF THE INVENTION

### FIELD OF THE INVENTION

The invention pertains to the field of hydraulic tensioners. More particularly, the invention pertains to a hydraulic tensioner with a pawl ratchet mechanism.

### DESCRIPTION OF RELATED ART

A hydraulic tensioner generally includes a housing, a piston fitted slidably into a piston bore formed in the housing biased in a protruding direction by a spring, and a fluid chamber defined by the piston and the piston bore of the housing. During operation of the tensioner, external force from a chain or belt is imparted on the distal end of the piston. The force on the distal end is balanced by the spring load and hydraulic pressure in the chamber.

In automobiles, hydraulic tensioners are applied to a timing system or an auxiliary drive (e.g. oil pump) system. When the external force is imparted from a chain to the distal end of a piston during inadequate hydraulic pressure in the chamber at the time of engine start or the like, the piston is easily forced to retract into the housing, thereby causing noise or oscillation.

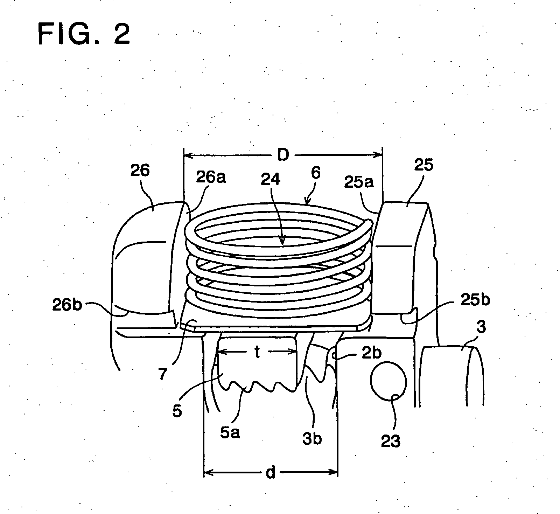

In order to prevent such retraction of the piston, a hydraulic tensioner with a pawl ratchet mechanism has been proposed, as shown in U.S. Pat. No. 5,304,099 (see FIG. 2). The ratchet mechanism includes a rack teeth portion formed on a sleeve disposed around the piston. A pawl is housed in a pawl hole extending perpendicular to the piston bore has a distal end portion engageable with the rack teeth portion of the sleeve. A pawl coil spring biases the pawl in an engaging direction with the rack teeth portion.

When the piston moves in a protruding direction along the sleeve with the distal end portion of the pawl engaged with the rack teeth portion of the sleeve, the piston is allowed to move in the protruding direction in such a way that the rack teeth portion of the sleeve travels over the distal end portion of the pawl. When the piston moves in a retracting direction along the sleeve, the piston is restrained from moving in the retracting direction by the engagement of the rack teeth portion of the sleeve with the distal end portion of the pawl.

However, in the prior art pawl ratchet mechanism, backlash is not provided. A hydraulic tensioner with a pawl ratchet mechanism having a backlash is needed and where a pawl coil spring will not hinder the movement of the pawl.

### SUMMARY OF THE INVENTION

In a hydraulic tensioner according to the present invention, a pawl that has a teeth portion engageable with a rack teeth portion of a piston at the bottom surface thereof is housed in a pawl hole. The pawl hole has a clearance between the front and rear end surface of the pawl, which is adapted to permit a longitudinal travel of the pawl. The clearance allows the pawl to travel in the longitudinal direction inside the pawl hole, thereby achieving a pawl ratchet mechanism with a backlash.

A plate is also provided between the pawl and the pawl coil spring. The spring force of the pawl coil spring is imparted to the upper surface of the pawl through the plate.

When the pawl travels in the longitudinal direction, the edge portion of the end of the pawl coil spring will not hinder the movement of the pawl and thus the travel of the pawl can be carried out smoothly. On the other hand, in the prior art tensioners the pawl coil spring directly contacts the upper surface of the pawl. Rotation of the pawl coil spring due to the travel of the pawl sometimes causes the edge portion of the end of the pawl coil spring to interfere with the pawl, even if the edge portion of the end of the pawl coil spring was not in contact with the pawl at first. However, in the present invention, since the pawl coil spring does not directly contact the pawl, the pawl coil spring will not rotate due to the rotation of the pawl and thus the above-mentioned problem will not occur.

The longitudinal length of the pawl spring housing portion may be longer than the longitudinal length of the pawl hole. Also, the longitudinal length of the plate may be essentially equal to the longitudinal length of the pawl spring housing portion. In this embodiment, the plate will not move longitudinally in the pawl spring housing portion along with the pawl and thereby a stable spring force of the pawl coil spring can be applied to the pawl.

The outside diameter of the pawl coil spring may be essentially equal to the longitudinal length of the pawl spring housing portion. In this embodiment, a stable spring force of the pawl coil spring can be applied to the upper surface of the pawl over the entire stroke of the pawl with the pawl coil spring securely held in the pawl spring housing portion.

In addition, the longitudinal length of the plate may be substantially equal to the longitudinal length of the pawl hole. In this embodiment as well, when the pawl travels to the front end side or the rear end side of the pawl hole, the plate can be always disposed on the upper surface of the pawl and thereby a stable spring force of the pawl coil spring through the plate can be imparted to the pawl.

The plate is preferably be formed of steel or hard plastic resin and may be formed with a plurality of protrusions each extending in the longitudinal direction on the lower surface thereof. The plate may be in contact with the upper surface of the pawl through these protrusions. Frictional force imparted from the plate to the pawl may be lessened, thereby achieving a smooth travel of the pawl.

The pawl spring housing portion may be open upwardly and a detachable cover may be provided to cover this open portion. In this embodiment, the upper end of the pawl coil spring is pressed against the upper surface of the cover.

The pawl spring housing portion may penetrate the housing in the lateral direction, and each opening portion may be connected with each other. In this case, the laterally opening portions of the pawl hole and the pawl spring housing portion and the upwardly opening portion of the pawl spring housing portion is covered by the detachable cover. Since the pawl hole and the pawl spring housing portion has an open space, installation of the pawl and the pawl coil spring into the housing may be carried out easily.

### BRIEF DESCRIPTION OF THE DRAWING

Fig. 1 shows a perspective view of a hydraulic tensioner according to an embodiment of the present invention.
Fig. 2 shows an enlarged perspective view of a pawl and pawl coil spring portion of the hydraulic tensioner in Figure 1 in which a cover is detached.

### DETAILED DESCRIPTION OF THE INVENTION

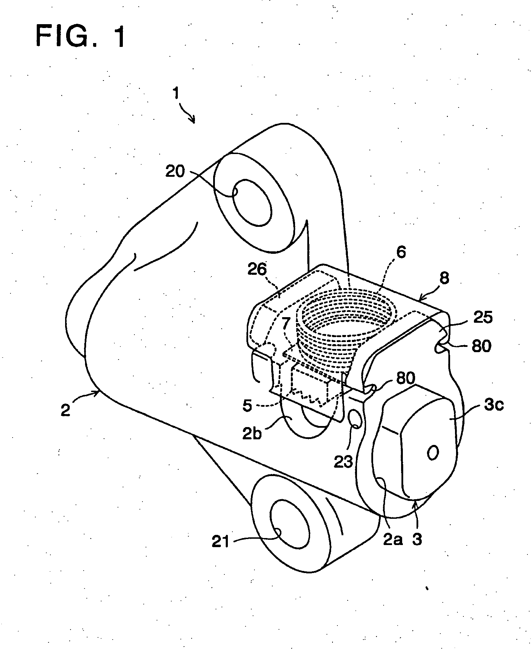

As shown in FIGS. 1 and 2 , a hydraulic tensioner 1 includes a housing 2 formed with a piston bore 2a open at one end that extends in the axial direction, a piston 3 that is slidably fitted into the piston bore 2a of the housing 2 and presses against a chain (not shown), and a pawl 5 that has a teeth portion 5a on the bottom surface to engage with a rack teeth portion 3b formed on a portion of the outer circumference of the piston 3 that is adapted to permit travel of the piston 3 in the protruding direction and to restrain travel in the rearward direction.

A piston spring (not shown) is compressed inside the piston bore 2a of the housing 2 to bias the piston 3 in a protruding direction from the piston bore 2a. A fluid chamber (not shown) is defined by the piston 3 and the inside wall of the piston bore 2a in the housing 2. At the bottom of the housing 2, an inlet hole (not shown) is formed to introduce engine oil from a source of pressurized fluid (also not shown) into the fluid chamber. Also, in the housing 2, bolt holes 20, 21 are formed to receive fastening bolts for installation of the hydraulic tensioner 1 onto an engine.

The housing 2 has a pawl hole 2b formed therein to penetrate the housing 2 in the direction perpendicular to the extending direction of the piston bore 2a. The pawl hole 2b is connected to the piston bore 2a. The pawl 5 is an elongated member extending in the lateral direction and having a generally rectangular cross-sectional shape. The opposite ends of the pawl 5 are disposed at the positions in the vicinity of the opening portions of the pawl hole 2b. In other words, the pawl 5 is housed in the pawl hole 2b. As shown in FIG. 2, the width t of the pawl 5 is shorter than the width d of the pawl hole 2b, i.e. t<d, and thus a clearance is formed between the pawl 5 and the pawl hole 2b. Thereby, the pawl 5 can be translatable in the pawl hole 2b in the left and right direction in FIG. 2.

The pawl hole 2b is also open upwardly and a pawl coil spring 6 is compressed over the pawl 5 to press against the pawl 5, such that the teeth portion 5a of the pawl 5 engages with the rack teeth portion 3b of the piston 3. A pair of upwardly extending walls 25, 26 spaced apart in the left and right direction in FIG. 2 are provided over the pawl hole 2b. A pawl coil spring 6 is housed in a pawl spring housing portion 24 defined by the walls 25, 26.

The outer diameter of the pawl coil spring 6 is substantially equal to the distance D between the opposing inner walls 25a and 26a of the walls 25, 26, i.e. the length of the pawl spring housing portion 24. Also, the distance D is longer than the length d of the pawl hole 2b.

Between the pawl coil spring 6 and the pawl 5, a plate 7, preferably made of steel or hard plastic resin is provided. The compressive force of the pawl coil spring 6 is imparted to the upper surface of the pawl 5 through the plate 7. The length of the plate 7 in the front to rear end direction is substantially equal to the length D of the pawl spring housing hole 24 in the front to rear end direction.

The pawl spring housing portion 24 opens upwardly and sideways and a cover 8 is provided to cover these opening portions of the housing 2 shown in FIG. 1. The cover 8 is flat and U-shaped in cross-section and the lower ends thereof extend to the central portion of the pawl hole 2b. The upper end of the pawl coil spring 6 is pressed against the upper surface of the cover 8.

A portion of the cover 8 has an inwardly bent engaging hook 80. On the other hand, the lower ends of the walls 25, 26 have indented portions 25b, 26b shown in FIG. 2.

The engaging hook 80 of the cover 8 is detachably engageable with the indented portions 25b, 26b.

A through hole 23 is formed at the position in the vicinity of the opening portion of the piston bore 2a to penetrate the housing 2. The through hole 23 is adapted to receive a retaining pin (not shown) to hold the piston 3 in the retracted state at the time of shipping of the tensioner. The retaining pin that has been inserted into the through hole 23 engages with engaging grooves (not shown) formed at the head portion of the piston 3.

During operation, the combined efforts of the resilient force of the piston spring and hydraulic pressure of the fluid chamber act on a chain through a tensioner arm (not shown) from the distal end surface 3c of the piston 3 to maintain tension in the chain.

When the chain presses against the distal end surface 3c of the piston 3 when adequate fluid pressure is not present in the fluid chamber at the time of engine start, the piston 3 retracts along until the pawl 5 engages the rack teeth portion 3b of the piston 3. Thereby, the rear end surface of the pawl 5 contacts the inside wall surface of the pawl hole 2b and thus travel of the piston in the rearward direction is stopped.

The clearance between the pawl hole 2b and the pawl 5, allows the pawl 5 to be longitudinally (i.e. axially along the piston) translatable in the pawl hole 2b in conjunction with the movement of the piston 3, thereby achieving a pawl ratchet mechanism with a backlash.

The plate 7 between the pawl 5 and the pawl coil spring 6 imparts the spring force of the pawl coil spring 6 to the upper surface of the pawl 5 through the plate 7. Smooth travel of the pawl 5 is achieved because the edge portion of the end of the pawl coil spring 6 does not hinder the movement of the pawl 5 during the longitudinal movement of the pawl 5.

The longitudinal length D of the pawl spring housing portion 24 is longer than the longitudinal length d of the pawl hole 2b, and the longitudinal length of the plate 7 is substantially equal to the longitudinal length D of the pawl spring housing portion 24. The plate 7 will not move together with the pawl 5 in the longitudinal direction inside the pawl spring housing portion 24. Thereby, a spring force of the pawl coil spring 6 can be stably applied to the pawl 5.

Furthermore, since the outer diameter of the pawl coil spring 6 is substantially equal to the longitudinal length D of the pawl spring housing portion 24, a stable spring force can be imparted to the upper surface of the pawl 5 over the entire stroke of the pawl 5 with the pawl coil spring 6 firmly held in the pawl spring housing portion 24. Since the pawl hole 2b and the pawl spring housing portion 24 both have a space that opens upwardly and sideways, installation of the pawl 5 and the pawl coil spring 6 can be carried out smoothly.

A plurality of longitudinally extending protrusions (not shown) may be formed on the bottom surface of the plate 7 and the plate 7 may be in contact with the upper surface of the pawl 5 through these protrusions. In this case, frictional force imparted from the plate 7 to the pawl 5 may be lessened, thereby achieving smooth travel of the pawl 5.

In addition, the longitudinal length D of the pawl spring housing portion 24 may be equal to the longitudinal length d of the pawl hole 2b. In this case, the longitudinal length of the plate 7 substantially equals to the longitudinal length d of the pawl hole 2b. The plate 7 may be always located on the upper surface of the pawl 5 over the entire stroke of the pawl 5 and the spring force of the pawl coil spring 6 may be stably imparted to the pawl 5 through the plate 7.

Since the clearance is adapted to permit a longitudinal travel of the pawl between the front and rear end surface of the pawl and the pawl hole, a pawl ratchet mechanism with a backlash is achieved. Also, in this case, provision of a plate between the pawl and the pawl coil spring can prevent the edge portion of the end of the pawl coil spring from hindering the movement of the pawl during the longitudinal travel of the pawl, thereby achieving a smooth movement of the pawl.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A hydraulic tensioner for applying tension to a chain comprising:
a housing having a cylindrical bore and a pawl hole;
a hollow piston having rack teeth along its length slidably received by the bore and
defining a fluid chamber with the bore;
a spring biasing the piston in a protruding direction from the bore;
a pawl received by the pawl hole of the housing having a front surface, a rear surface, and a tooth section biased to engage the rack teeth of the piston by a pawl spring in a pawl spring accommodating section of the pawl hole, allowing movement of the piston in a protruding direction and preventing movement in a retracting direction; and
a plate having a top surface and a bottom surface, located between the pawl spring and the pawl, wherein the pawl spring biases the plate and the pawl;
wherein a clearance is present between the pawl hole and the front surface and the rear surface of the pawl, such that longitudinal travel of the pawl is permitted.

2. The hydraulic tensioner of claim 1, further comprising a detachable cover for the pawl spring accommodating section of the pawl hole.

3. The hydraulic tensioner of claim 1, wherein the plate is made of steel or a rigid resin.

4. The hydraulic tensioner of claim 1, wherein the plate further comprises a plurality of ridges extending longitudinally on the bottom surface of the plate, such that the ridges contact the pawl when the pawl spring biases the plate.

5. The hydraulic tensioner of claim 1, wherein the plate has a longitudinal length substantially equal to a longitudinal length of the pawl hole.

6. The hydraulic tensioner of claim 5, wherein the longitudinal length of the pawl hole is smaller than a longitudinal length of the pawl spring accommodating section.

7. The hydraulic tensioner of claim 6, wherein the longitudinal length of the pawl spring accommodating section is substantially equal to the longitudinal length of the plate.

8. The hydraulic tensioner of claim 6, wherein the longitudinal length of the pawl spring accommodating section is substantially equal to an outside diameter of the pawl coil spring.
